# EUROPÄISCHE PATENTSCHRIFT

(11) **EP 2 051 868 B1**
(45) Veröffentlichungstag und Bekanntmachung des Hinweises auf die Patenterteilung: **01.12.2010**
(21) Anmeldenummer: 07765150.3
(22) Anmeldetag: 10.07.2007
(51) Int. Cl.: B60H 1/00

(54) **KÜHL-/KLIMAANLAGE MIT ZWEI THERMISCH MITEINANDER GEKOPPELTEN KREISLÄUFEN**
COOLING/AIR-CONDITIONING SYSTEM HAVING TWO CIRCUITS WHICH ARE THERMALLY COUPLED TO ONE ANOTHER
EQUIPEMENT DE REFROIDISSEMENT/CLIMATISATION MUNI DE DEUX CIRCUITS COUPLES THERMIQUEMENT ENTRE EUX

(30) Priorität: 17.08.2006 DE 102006038677
(43) Veröffentlichungstag der Anmeldung: 29.04.2009
(73) Patentinhaber: Bayerische Motoren Werke Aktiengesellschaft, 80809 München (DE)
(72) Erfinder: SCHNEIDER, Florian, 82223 Eichenau (DE); MEIJERING, Alexander, 80809 München (DE); SATZGER, Peter, 86899 Landsberg am Lech (DE)
(86) Internationale Anmeldenummer: PCT/EP2007/006088
(87) Internationale Veröffentlichungsnummer: WO 2008/019734

(56) Entgegenhaltungen:
- EP-A- 1 652 702
- US-A1- 2005 061 497
- US-A1- 2005 097 917
- US-A1- 2005 178 537
- US-A1- 2006 137 853

## Beschreibung

Die vorliegende Erfindung betrifft eine Kühl-/Klimaanlage gemäß dem Oberbegriff des Patentanspruches 1.

Eine derartige Kühl-/Klimaanlage ist aus der US 2006/0137853 A1 bekannt.

Manche Fahrzeuge sind mit einer sog. Start-/Stoppautomatik ausgestattet, welche den Verbrennungsmotor aus Effizienzgründen während Stauphasen bzw. wenn das Fahrzeug an einer Ampel steht, vorübergehend abschaltet und beim erneuten Anfahren automatisch wieder startet. Auch bei Hybridfahrzeugen, d. h. Fahrzeugen, die mit einem Verbrennungsmotor und zusätzlich mindestens einem Elektromotor, der ein elektrisches Fahren ermöglicht, ausgestattet sind, gibt es Betriebsphasen, in denen der Verbrennungsmotor ausgeschaltet ist und das Fahrzeug ausschließlich elektromotorisch betrieben wird. Um in Betriebsphasen, in denen der Verbrennungsmotor abgestellt ist, die Klimatisierung des Fahrgastraums aufrecht zu erhalten, ist es bekannt, den Verdampfer des Kältemittelkreislaufs der Klimaanlage so zu konzipieren, dass er für eine begrenzte Zeit Kälteleistung zur Verfügung stellen kann, auch wenn die Klimaanlage nicht vom Verbrennungsmotor angetrieben wird. Derartige Verdampfer werden auch als "Speicherverdampfer" bezeichnet, in denen eine gewisse Menge Kältemittel hermetisch eingeschlossen ist, das bei abgeschaltetem Verbrennungsmotor, d. h. wenn der Verdichter der Klimaanlage nicht angetrieben wird, für einen begrenzten Zeitraum Kälteleistung zur Verfügung stellt. Derartige Verdampfer mit integriertem Kältespeicher beanspruchen relativ viei Bauraum und scheiden daher für einen Einbau in das Klimagerät eines Fahrzeuges häufig aus, da in dem Bereich, in dem der üblicherweise Verdampfer angeordnet wird, erhebliche Bauraumknappheit besteht.

Speicherverdampfer weisen prinzipbedingt auch eine deutlich höhere thermische Trägheit auf, als konventionelle Verdampfer ohne Speicherfunktion. Dies hat zur Folge, dass bei maximaler Kälteleistungsanforderung die Kälteleistung nur zeitlich verzögert zur Verfügung steht. Desweiteren ist eine Steuerung der Auf- bzw. Entladung des in den Verdampfer integrierten Kältespeichers nicht möglich, da die Verdampfertemperatur unmittelbar den "Ladezustand" des Kältespeichers bestimmt.

Aus dem Stand der Technik bekannt sind ferner Kühl-/Klimaanlagen mit zwei Kreisläufen, nämlich mit einem herkömmlichen Kältekreislauf und einem zweiten Kreislauf (Sekundärkreislauf), der zur Kühlung von Elektronikkomponenten dient und der thermisch, z. B. über den Verdampfer des Kältekreislaufs mit dem Kältekreislauf gekoppelt ist. Dieser Sekundärkreislauf dient ausschließlich zur Kühlung bestimmter Komponenten, wie z. B. Elektronikkomponenten.

Aufgabe der Erfindung ist es, eine Kühl-/Klimaanlage, insbesondere für Fahrzeuge, zu schaffen, die zwei miteinander thermisch gekoppelte Teilkreise aufweist und die eine zeitlich begrenzte Überbrückung von Betriebsphasen ermöglicht, in denen der Kältemittelkreislauf nicht aktiv angetrieben wird.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Ausgangspunkt der Erfindung ist eine Kühl-/Klimaanlage, insbesondere für Fahrzeuge, mit einem ersten von einem Kältemittel durchströmten Kreislauf, der im Folgenden auch als "Kältemittelkreislauf" bezeichnet wird. Der Kältemittelkreislauf weist einen Verdampfer auf, der dazu vorgesehen ist, Luft, insbesondere in einen Fahrgastraum des Fahrzeugs einzuleitende Luft, abzukühlen. Ferner ist ein zweiter Kreislauf vorgesehen, der im Folgenden als "Kühlkreislauf" bezeichnet wird. Der Kühlkreislauf dient zur Kühlung eines "Systems", insbesondere einer zu kühlenden Fahrzeugkomponente, z.B. einer Elektronik. Der Kühlkreislauf ist über einen Kältemittel-/Kühlflüssigkeitswärmetauscher mit dem Kältemittelkreislauf thermisch gekoppelt.

Der Kern der Erfindung besteht darin, dass in den zweiten Kreislauf ein Kältespeicher integriert ist. Unter dem Begriff "Kältespeicher" wird eine Komponente des zweiten Kreislaufs verstanden, die ein hohes Kältespeicherungsvermögen aufweist. Hierbei kann es sich beispielsweise um einen Behälter handeln, der mit einem Medium, das eine hohe Wärmekapazität aufweist, befüllt ist und das bei entsprechend niedriger Temperatur eine gewisse Zeit lang "Kälteleistung" zur Verfügung stellen kann. Wenngleich das in den Leitungen des zweiten Kreislaufs strömende Kühlmittel auch eine gewisse "Kältespeicherung" ermöglicht, wird unter dem Begriff "Kältespeicher" eine separate Komponente des zweiten Kreislaufs verstanden.

Wie bereits erwähnt, sind die beiden Kreisläufe thermisch miteinander gekoppelt. Hierzu ist ein Kältemittel-/Kühlmittelwärmetauscher vorgesehen, der in den Verdampfer des Kältemittelkreislaufs integriert sein kann.

Ein wesentlichen Vorteil der Erfindung ist darin zu sehen, dass der Verdampfer und der Kältespeicher räumlich voneinander getrennt im Fahrzeug angeordnet sein können, was insbesondere bei Fahrzeuganwendungen mit beengten Bauraumverhältnissen von Bedeutung ist.

Der Kältemittel-/Kühlmittelwärmetauscher ist so ausgeführt, dass bei einer Entladung des Kältespeichers, d. h. bei einer "Wärmeaufnahme" des Kältespeichers eine möglichst homogene Verteilung der Luftaustrittstemperatur über den Verdampfer erreicht wird. Dies kann dadurch erreicht werden, dass Flachrohre des Verdampfers, die von Kältemittel des Kältekreislaufs durchströmt sind, unmittelbar thermisch mit Flachrohren des Sekundärkreislaufs verbunden sind und auf ihrer gegenüberliegenden Seite von Luft umströmt werden. Dadurch wird ein direkter Wärmeübergang Luft/Kältemittel, Kältemittel/Kühlmittel und Kühlmittel/Luft ermöglicht.

Der Kältemittelspeicher kann optional in mehrere, räumlich getrennte Abschnitte unterteilt sein. Der Kältespeicher ist gegenüber der Umgebung thermisch isoliert.

Im Folgenden wird die Erfindung im Zusammenhang mit der Zeichnung näher erläutert. Es zeigen
- Fig. 1: einen Schaltplan der Kühl-/Klimaanlage zur Erläuterung des Grundprinzips der Erfindung;
- Fig. 2: einen Querschnitt durch einen Verdampfer mit integriertem Käl- temittel-/Kühlmittelwärmetauscher gemäß der Erfindung; und
- Fig. 3: eine Variante des in Fig. 1 gezeigten Ausführungsbeispiels.

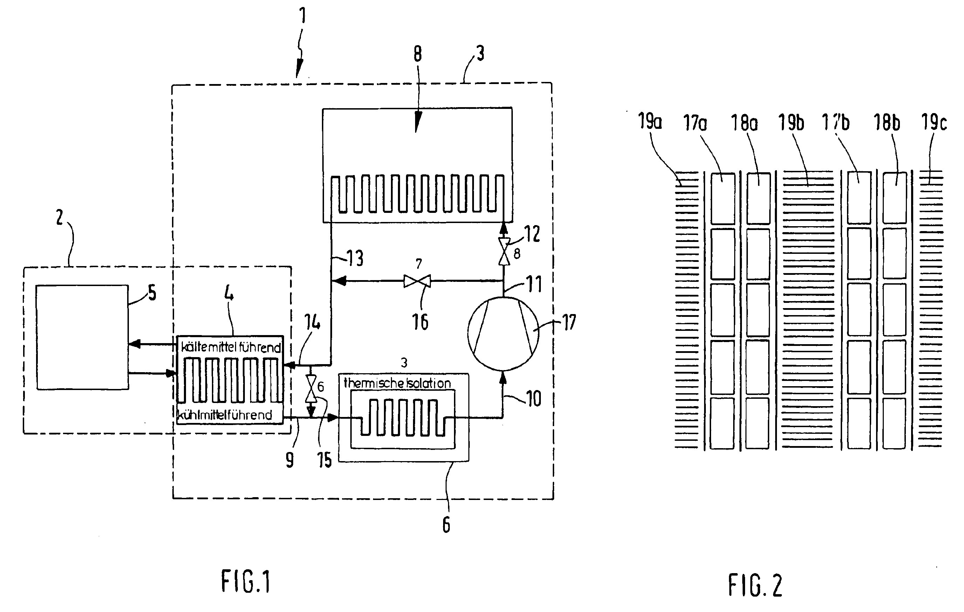

Fig. 1 zeigt eine Kühl-/Klimaanlage 1 mit einem Kältemittelkreislauf 2 und einem Kühlmittelkreislauf 3.

Der Kältemittelkreislauf 2 weist einen Verdampfer 4 und die üblichen, weiteren Komponenten eines Kältemittelkreislaufs auf, die hier nur schematisch durch einen Block angedeutet sind und einen Verdichter, einen Kondensator und ein Expansionsorgan (nicht dargestellt) umfassen.

Der Verdampfer 4 ist sowohl dem Kältemittelkreislauf 2 als auch dem Kühlmittelkreislauf 3 zuzurechnen. In den Verdampfer 4 ist ein Kältemittel-/Kühlmittelwärmetauscher integriert, der einen Wärmeaustausch zwischen den beiden Kreisläufen 2, 3 ermöglicht.

Der Kühlkreislauf 3 weist neben dem Verdampfer 4 in Strömungsrichtung, die durch Strömungspfeile angedeutet ist, einen Kältespeicher 6, eine Pumpe 7 und ein zu kühlendes System 8, bei dem es sich beispielsweise um eine E-lektronikkomponente des Fahrzeugs handeln kann, auf. In Strömungsrichtung des Kühlmittelkreislaufs 3 gesehen ist der Kältespeicher 6 vor der zu kühlenden Komponente 8 angeordnet. Bei dem hier gezeigten Ausführungsbeispiel ist der Kältespeicher 6 zwischen einem Kühlmittelausgang 9 des in den Verdampfer 4 integrierten Kältemittel-/Kühlmittelwärmetauschers und einem Saugeingang 10 der Pumpe 7 angeordnet. Ein Druckausgang 11 der Pumpe 7 ist über ein Ventil 12 mit einem Kühlmitteleingang der zu kühlenden Komponente 8 verbunden. Ein Kühlmittelausgang der zu kühlenden Komponente 8 ist über eine Kühlmittelleitung 13 mit einem Kühlmitteleingang 14 des in den Verdampfer 4 integrierten Kältemittel-/Kühlwärmetauschers verbunden. Der Kühlmitteleingang 14 und der Kühlmittelausgang 9 des Kältemittel-/Kühlmittelwärmetauschers wiederum sind über ein Ventil 15 miteinander verbunden. Vollständigkeitshalber sei noch auf ein Ventil 16 hingewiesen, das zwischen dem Druckausgang 11 der Pumpe 7 und dem Kühlmitteleingang 14 des Kältemittel-/Kühlmittelwärmetauschers angeordnet ist.

Zusätzlich zu den in Fig. 1 gezeigten Komponenten kann in dem Kühlmittelkreislauf 3 ein Kühlmittelausgleichsbehälter vorgesehen sein. Der Kältespeicher 6 kann in einen solchen Kühlmittelausgleichsbehälter integriert sein. Vorzugsweise ist der Kältespeicher 6 thermisch gegenüber der Umgebung isoliert. Er kann auch in mehrere räumlich getrennte Kältespeichermodule unterteilt sein.

Das Aufladen bzw. Entladen des Kältespeichers 6 kann bei dem in Fig. 1 gezeigten Ausführungsbeispiel über die Pumpe 7 und die Ventile 12 und 16 erfolgen.

Wenn der Kältekreislauf 2 außer Betrieb ist, z. B. bei abgeschaltetem Verbrennungsmotor des Fahrzeugs, kann die zu kühlende Komponente 8 über den Kältespeicher 6 entwärmt werden - oder anders ausgedrückt - der aufgeladene Kältespeicher 6 kann als Wärmesenke für die zu kühlende Komponente 8 verwendet werden.

Fig. 2 zeigt einen Querschnitt durch den in dem Verdampfer integrierten Kältemittel-/Kühlmittelwärmetauscher. Der Kältemittel-/Kühlmittelwärmetauscher weist kältemittelführende Flachrohre 17a, 17b und thermisch unmittelbar damit verbundene kühlmittelführende Flachrohre 18a, 18b auf sowie sich unmittelbar an die Flachrohrpaare 17a, 18a bzw. 17b, 18b anschließende Kühlrippen 19a, 19b, 19c auf.

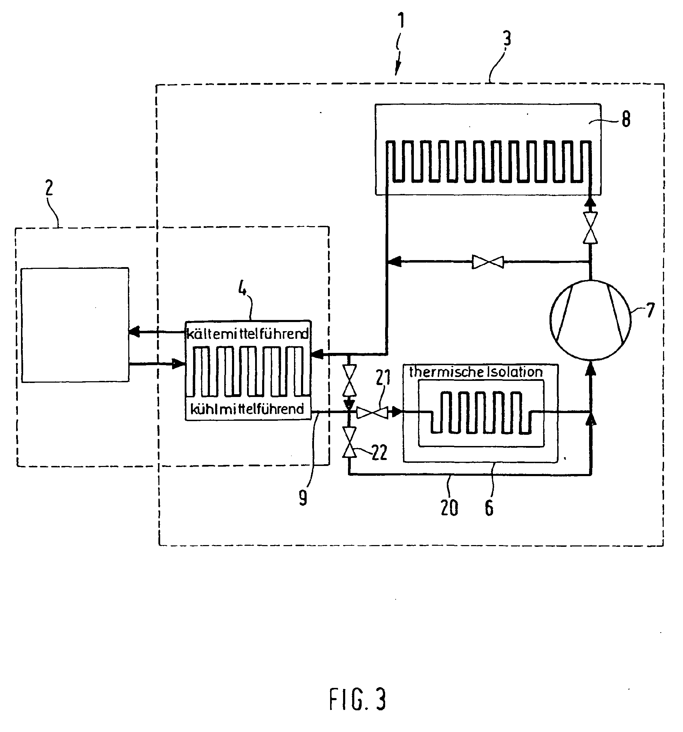

Das Ausführungsbeispiel der Fig. 3 unterscheidet sich von dem der Fig. 1 durch eine "Bypassleitung" 20, die parallel zu dem Kältespeicher 6 angeordnet ist. Zwischen dem Kühlmittelausgang 9 und dem Eingang in den Kältespeicher 6 ist ein Ventil 21 angeordnet. Ein weiteres Ventil 22 ist in der Bypassleitung 20 angeordnet. Über die Bypassleitung 20 kann, wenn das Ventil 21 geschlossen und das Ventil 22 geöffnet ist, der Kältespeicher "Überbrückt" werden.

Die Bypassleitung 20 ermöglicht die Kühlung der Komponente 8 bei höheren Verdampfertemperaturen, ohne dass zugleich der Kältespeicher 6 durchströmt wird, wenn dessen Temperatur oberhalb der "Entladetemperatur" des Kältespeichermediums liegt. Dadurch kann eine Entladung des zuvor geladenen Kältespeichers in diesem Betriebsfall vermieden werden.

## Patentansprüche

1. Kühl-/Klimaanlage (1), insbesondere für Fahrzeuge, mit
- einem ersten von einem Kältemittel durchströmten Kreislauf (2), der einen Verdampfer (4) aufweist, wobei der Verdampfer (4) dazu vorgesehen ist, Luft, insbesondere in einem Fahrgastraum des Fahrzeugs einzuleitende Luft, abzukühlen und
- einem zweiten als Kühlkreislauf zur Kühlung eines zu kühlenden Systems (8), insbesondere einer zu kühlenden Fahrzeugkomponente, vorgesehenen Kreislauf (3), der von einem Kühlmittel durchströmt ist und der thermisch mit dem ersten Kreislauf (2) gekoppelt ist, wobei der zweite Kühlkreislauf (3) einen Kältespeicher (6) aufweist.
**dadurch gekennzeichnet,**
**dass** die beiden Kreisläufe (2, 3) über einen Kältemittel-/Kühlmiftelwärmetauscher thermisch miteinander gekoppelt sind, wobei der Kältemittel-/Kühlmittelwärmetauscher in den Verdampfer (4) integriert ist,
**dass** der Kältespeicher gegenüber der Umgebung thermisch isoliert ist und
**dass** der Verdampfer (4) von Kältemittel durchströmte Flachrohre ersten Kreislaufs (2) aufweist, die unmittelbar thermisch mit Flachrohren des zweiten Kreislaufs (3) verbunden sind.

2. Kühl-/Klimaanlage (1) nach Anspruch 1, **dadurch gekennzeichnet, dass** der zweite Kreislauf (3) eine Pumpe (7) aufweist, welche Kühlflüssigkeit in dem zweiten Kreislauf (3) umpumpt.

3. Kühl-/Klimaanlage (1) nach einem der Ansprüche 1 oder 2, **dadurch gekennzeichnet, dass** der Kältespeicher (6) in Strömungsrichtung des zweiten Kreislaufs gesehen vor dem zu kühlenden System (8) angeordnet ist.

4. Kühl-/Klimaanlage (1) nach einem der Ansprüche 1 bis 3, **dadurch gekennzeichnet, dass** der Kältespeicher (6) zwischen dem Kältemittel-/Kühlflüssigkeitswärmetauscher und der Pumpe (7) angeordnet ist.

5. Kühl-/Klimaanlage (1) nach einem der Ansprüche 1 bis 4, **dadurch gekennzeichnet, dass** der erste Kreislauf (2), vom Verdampfer (4) in Strömungsrichtung des Kältemittels gesehen, einen Verdichter, einen Kondensator und ein Expansionsorgan aufweist.

## Claims

1. A cooling/air-conditioning system (1), in particular for vehicles, with
- a first circuit (2) through which a refrigerant flows, which has an evaporator (4), the evaporator (4) being provided to cool air, in particular air to be guided into a passenger compartment of the vehicle and
- a second circuit (3) provided as a cooling circuit for cooling a system (8) to be cooled, in particular a vehicle component to be cooled, which circuit has a coolant flowing through it and is thermally coupled to the first circuit (2), the second cooling circuit (3) having a refrigeration accumulator (6),
**characterised in that** the two circuits (2, 3) are thermally coupled to one another by a refrigerant/coolant heat exchanger, the refrigerant/coolant heat exchanger being integrated into the evaporator (4), **in that** the refrigeration accumulator is thermally insulated with respect to the environment and **in that** the evaporator (4) has flat pipes, through which refrigerant flows, of the first circuit (2), which are directly thermally connected to flat pipes of the second circuit (3).

2. A cooling/air-conditioning system (1) according to claim 1, **characterised in that** the second circuit (3) has a pump (7), which recirculates cooling liquid in the second circuit (3).

3. A cooling/air-conditioning system (1) according to either of claims 1 or 2, **characterised in that** the refrigeration accumulator (6) is arranged in front of the system (8) to be cooled, viewed in the flow direction of the second circuit.

4. A cooling/air-conditioning system (1) according to any one of claims 1 to 3, **characterised in that** the refrigeration accumulator (6) is arranged between the refrigerant/cooling liquid heat exchanger and the pump (7).

5. A cooling/air-conditioning system (1) according to any one of claims 1 to 4, **characterised in that** the first circuit (2), viewed from the evaporator (4) in the flow direction of the refrigerant, has a compressor, a condenser and an expansion member.

## Revendications

1. Installation de refroidissement/de climatisation (1) pour véhicule automobile comprenant :
- un premier circuit (2) traversé par un agent frigorifique comportant un évaporateur (4) pour refroidir de l'air, notamment l'air alimentant l'habitacle du véhicule, et
- un second circuit de refroidissement pour refroidir un système à refroidir (8), notamment un circuit (3) relié à un composant du véhicule à refroidir, ce circuit étant traversé par un agent de refroidissement et il est couplé thermiquement au premier circuit (2),
- le second circuit de refroidissement (3) comportant un accumulateur de froid (6),
**caractérisée en ce que**
- les deux circuits (2, 3) sont couplés thermiquement l'un à l'autre par un échangeur de chaleur agent frigorifique/agent de refroidissement,
- l'échangeur de chaleur agent frigorifique/agent de refroidissement étant intégré dans un évaporateur (4),
- l'accumulateur de froid étant isolé thermiquement vis-à-vis de l'environnement, et
- l'évaporateur (4) comporte un premier circuit (2) avec des tubes plats traversés par l'agent frigorifique, et qui sont directement reliés thermiquement au tube plat du second circuit (3).

2. Installation de refroidissement/climatisation (1) selon la revendication 1,
**caractérisée en ce que**
le second circuit (3) comporte une pompe (7) qui fait circuler le liquide de refroidissement dans le second circuit (3).

3. Installation de refroidissement/climatisation (1) selon la revendication 1 ou 2,
**caractérisée en ce que**
l'accumulateur de froid (6) est installé en amont du système (8) à refroidir selon le sens de circulation du second circuit.

4. Installation de refroidissement/climatisation (1) selon l'une des revendications 1 à 3,
**caractérisée en ce que**
l'accumulateur de froid (6) est installé entre l'échangeur de chaleur agent frigorifique/liquide de refroidissement et la pompe (7).

5. Installation de refroidissement/climatisation (1) selon l'une des revendications 1 à 4,
**caractérisée en ce que**
à partir de l'évaporateur (4) et selon le sens de passage de l'agent frigorifique, le premier circuit (2) comporte un compresseur, un condenseur et un organe expanseur.
